# EUROPÄISCHE PATENTANMELDUNG

(11) **EP 2 740 819 A1**
(43) Veröffentlichungstag der Anmeldung: **11.06.2014**
(21) Anmeldenummer: 12195444.0
(22) Anmeldetag: 04.12.2012
(51) Int. Cl.: C23C 30/00, C22C 27/06, F01D 5/28

(54) **Legierung aus aluminiumreichen MAX-Phasen, Pulver und Schichtsystem**

(71) Anmelder: Siemens Aktiengesellschaft, 80333 München (DE)
(72) Erfinder: Flores Renteria, Arturo, 10715 Berlin (DE); Halberstadt, Knut, 45481 Mülheim an der Ruhr (DE); Stamm, Werner, 45481 Mülheim an der Ruhr (DE)

(57) **Zusammenfassung**

Durch die Verwendung von aluminiumreichen MAX-Phasen kann die Bruchzähigkeit gesteigert werden, so dass der Erosionswiderstand steigt und die je nach Substratmaterial vorhandene Elektronegativität herabgesetzt, so dass solche Beschichtungen sich für chromreiche Substrate eignen.

## Beschreibung

Die Erfindung betrifft Legierungen, Pulver und Schutzschichten, bei denen aluminiumreiche MAX-Phasen verwendet und aufgebracht werden.

Für die Herstellung von Kompressorschaufeln werden chromreiche Stähle verwendet. Je nach geographischer Lage sind die Kompressorschaufeln einem aggressiven Arbeitsmedium durch Teilchen und Wasser ausgesetzt, die Erosion verursachen können. Ebenso verursacht Salz in der Luftfeuchtigkeit in Küstengegenden Korrosionsschädigungen auf der Oberfläche einer Turbinenschaufel des Kompressors.

Stand der Technik ist es, Titannitrid durch ein PVD-Verfahren aufzubringen, das jedoch nicht immer einen hinreichenden Schutz darstellen.

MAX-Phasen haben die allgemeine Formel Mₙ₊₁AXₙ mit n= 1 bis 3, M ist ein Übergangsmetall geringzahliger Gruppen (Sc, Ti, V, Cr, Zr, Nb, Mo, Hf und/oder Ta), X = C oder N sowie A ist ein A-Gruppenelement (Gruppe IIIA - VIA): Al, Si, P, S, Ga, Ge, As, Cd, In, Sn, Tl und/oder Pb.

Es ist daher Aufgabe der Erfindung eine Legierung, ein Pulver und eine Schichtsystem aufzuzeigen, die ein verbessertes Schutzverhalten aufweist.

Die Aufgabe wird gelöst durch eine Legierung gemäß Anspruch 1, ein Pulver gemäß Anspruch 3 und ein Schichtsystem nach Anspruch 4.

In den Unteransprüchen sind weitere vorteilhafte Maßnahmen aufgelistet, die beliebig miteinander kombiniert werden können um weitere Vorteile zu erzielen.

Ein Beispiel für eine Cr-Al-C Max-Phase nach dem Stand der Technik stellt folgende Zusammensetzung dar:
50at% Chrom (Cr)
25at% Aluminium (Al)
25at% Kohlenstoff (C).

Die Beschreibung stellt nur Ausführungsbeispiele der Erfindung dar.

Die MAX-Phasen stellen aufgrund ihrer Zusammensetzung eine optimale Wahl dar, da sie sowohl metallische und keramische Eigenschaften aufweisen. Dies wird erreicht durch den schichtförmigen Aufbau von nanoförmigen Lagen von M-X-Elementen und metallischen Bindungen M-A.

Die Verwendung von aluminiumreichen MAX-Phasen stellt die verbesserte Lösung dar.

Der höhere, d.h. der deutlich über üblichen Schwankungen liegende Anteil von Aluminium (Al) zu der typischen Verteilung 2:1 zu 1:1 reduziert die Differenz der Elektroaktivität verglichen zu einem Basismaterial, so dass die lokale Korrosionsattacke im Substrat, das insbesondere einen chromreichen Stahl darstellt, durch eine MAX-Beschichtung vermieden wird, die insbesondere für Kompressorschaufeln von Gasturbinenmaschinen verwendet werden.

Als Schutzschicht wird die MAX-Phase insbesondere direkt auf das Substrat oder das chromreiche Substrat aufgebracht.
Für die Beschichtung können entsprechende Pulver aus MAX-Phasen verwendet werden.

Zusätzlich wird die Bruchzähigkeit durch den höheren Anteil von Aluminium (Al) gesteigert.

Die erfindungsgemäße Beschichtung weist für das Element M, hier Chrom (Cr), Anteile zwischen 48at% und 52at% auf, der Anteil des A-Elements, hier vorzugsweise das Aluminium (Al) liegt bei 26at% bis 28at% bzw. der Anteil für X, hier der Kohlenstoffanteil (C) bei 22at% - 24at%.

Insbesondere besteht das Material aus Chrom (Cr), Aluminium (Al) und Kohlenstoff (C).

## Patentansprüche

1. Legierung aus einer aluminiumreichen MAX-Phase, insbesondere aus Aluminium (Al), Chrom (Cr) und Kohlenstoff (C).

2. Legierung nach Anspruch 1,
zumindest aufweisend:
26at% - 28at% Aluminium (Al),
insbesondere 27at% bis 28at% Aluminium (Al),
22at% - 24at% Kohlenstoff (C) und
48at% - 52at% Chrom (Cr)
insbesondere daraus bestehend.

3. Pulver, das eine Legierung nach Anspruch 1 oder 2 aufweist, insbesondere daraus besteht.

4. Schichtsystem,
die als Beschichtung eine aluminiumreiche MAX-Phase aufweist, insbesondere bei dem die Beschichtung aus einer aluminiumreichen MAX-Phase besteht,
ganz insbesondere für eine Kompressorschaufel.

5. Schichtsystem nach Anspruch 4,
das einen chromreichen Stahl als Substrat aufweist, insbesondere bei dem die aluminiumreiche MAX-Phase direkt auf dem Substrat vorhanden ist.

6. Schichtsystem nach einem oder beiden der Ansprüche 4 oder 5,
die eine Beschichtung hergestellt aus einer Legierung gemäß Anspruch 1 oder 2 oder aus einem Pulver gemäß Anspruch 2 aufweist.
